# EUROPEAN PATENT SPECIFICATION

(11) **EP 2 169 844 B1**
(45) Date of publication and mention of the grant of the patent: **03.05.2017**
(21) Application number: 08305598.8
(22) Date of filing: 25.09.2008
(51) Int. Cl.: H04L 1/06, H04B 7/00, H04L 1/00

(54) **Method and receiver for implementing frequency reuse in radio communication**
Verfahren und Empfänger zur Implementierung von Frequenzwiederverwendung bei Funkkommunikation
Procédé et récepteur de mise en oeuvre de la réutilisation des fréquences dans une communication radio

(43) Date of publication of application: 31.03.2010
(73) Proprietor: ALCATEL LUCENT, 92100 Boulogne-Billancourt (FR)
(72) Inventor: Frecassetti, Mario Giovanni, 24128, BERGAMO (IT); Valtolina, Roberto, 20056, TREZZO SULL'ADDA (IT); Boiocchi, Gianluca, 24046, OSIO SOTTO (IT)
(74) Representative: Shamsaei Far, Hassan

(56) References cited:
- WO-A-00/41318
- US-A- 5 983 101
- US-A1- 2002 155 811
- US-B1- 7 333 455

## Description

The present invention relates to frequency reuse in radio communication.

### BACKGROUND OF THE INVENTION

As it is known, radio spectrum is a limited resource and therefore efficient use of the radio spectrum is desired. One approach to make such efficient use of radio resources is the so-called multi-state modulation and coding technique. According to this technique, a variety of modulation states (or schemes), for example 16 QAM, 64 QAM or 256 QAM, are employed in order to improve the spectral efficiency of the radio channel. Also the coding may be modified in order to improve efficiency. Another attractive method for improving spectral efficiency is to transmit two different signals simultaneously using orthogonal polarizations at the same nominal carrier frequency over the same route. This technique is known as frequency reuse. In general terms, frequency reuse is based on the transmission of two data streams independently of each other on the same frequency, using two orthogonal polarizations so as to double the spectral efficiency. Some examples are the known horizontal H and vertical V polarization, circular polarization, clockwise and anticlockwise polarization. The transmit and receive antennas are therefore able to transmit and receive by distinguishing the two components of the polarization. In such cases the antennas used have a cross polarization discrimination (XPD) level which is typically greater than 30dB.

A problem associated with this technique is that the effectiveness of the system is dependent on maintaining a minimum level for the XPI for a given modulation scheme adopted. In practice, degradation due to fading or rain de-polarization, may cause the cross-polarization signal interference to reach undesired levels, with an associated increase in cross interference ratio.

Cross polarization Interference ratio (XPI) as referred to herein, is a ratio of the level of the respective power values at the reception point between a first radio (wanted) wave received and a second radio (unwanted) wave received.

Where additional improvement of cross-polarization interference ratio is required, an adaptive canceller, usually the so-called cross-polarization interference canceller (XPIC), may be used in order to cancel a cross-polarization interference signal from an orthogonal polarized signal. XPICs are known in the related art. US patent number 5,983,101 relates to a point to multipoint radio access system in which link characteristics including modulation type are allocated to radio links in a point to multipoint system.

### DESCRIPTION OF THE INVENTION

Embodiments of the present invention relate to implementing a frequency reuse technique together with an adaptive modulation technique as will be described in further detail herein. The frequency reuse technique implemented by embodiments of the present invention may, in addition, be performed using two or more channels, without the need to have the two or more channels within the same frequency spacing such that some channel spectrums may be only partially overlapping, as will described further below. The invention provides for a method for implementing frequency reuse in a radio communication system according to claim 1 wherein a first data stream is transmitted on a first channel using a first frequency, a first polarization and a first modulation scheme and at least one second data stream is transmitted on a second channel using a second frequency, a second polarization and a second modulation scheme, the first modulation scheme and the second modulation scheme being adaptive and the first polarization being different from the second polarization, the method comprising the step of changing at least one of said first modulation scheme and the second modulation scheme in response to detecting a level of co-channel interference between the first channel and the second channel. wherein changing at least one of said first modulation scheme and the second modulation scheme comprises the steps of: demodulating a signal received; detecting whether cross-polarization is present in the signal; if cross-polarization is detected to be present, determining whether a level of such cross-polarization interference is above a predetermined threshold level and if the level of cross-polarization interference is determined to be higher than the predetermined threshold level, transmitting a control signal indicating the presence of cross-polarization interference. The present invention provides further a receiver configured for implementing frequency reuse in a radio communication system, wherein a first data stream is received on a first channel using a first frequency, a first polarization and a first modulation scheme and at least a second data stream is transmitted on a second channel using a second frequency, a second polarization and a second modulation scheme, the first modulation scheme and the second modulation scheme being adaptive and the first polarization being different from the second polarization, the receiver being configured to detect a level of co-channel interference between the first channel and the second channel and to transmit a control signal indicative the presence of said cross-polarization interference in a radio channel in case the level of cross-polarization interference detected in said channel is determined to be higher than the predetermined threshold value.

In some embodiments of the present invention, the first frequency and the second frequency may be the same, and in some embodiments they may be different. In case the first frequency and the second frequency are different, they preserve certain level of overlap between each other.

These and further features and advantages of the present invention are described in more detail in the following description as well as in the claims with the aid of the accompanying drawings.

### BRIEF DESCRIPTION OF THE DRAWINGS

Figure 1 is a schematic representation of elements of a receiver using a cross-polarization interference canceller according to known techniques.
Figure 2 is a schematic representation of elements of a receiver using an adaptive modulation technique according to embodiments of the invention.
Figures 3a, 3b, 3c, 3d and 3e are alternative channel spectrum arrangements used in frequency reuse techniques.

### EXAMPLES OF PREFERRED EMBODIMENTS

Frequency reuse, also technically known as Co-Channel Dual Polarized (CCDP) technique is based on providing at least two parallel communication channels over the same link with orthogonal polarizations, thus substantially doubling the link capacity.

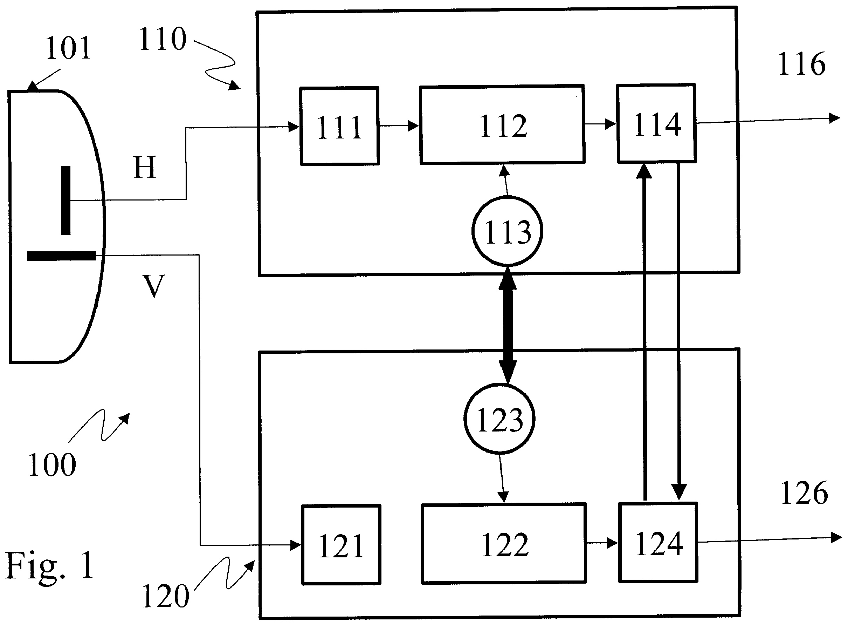

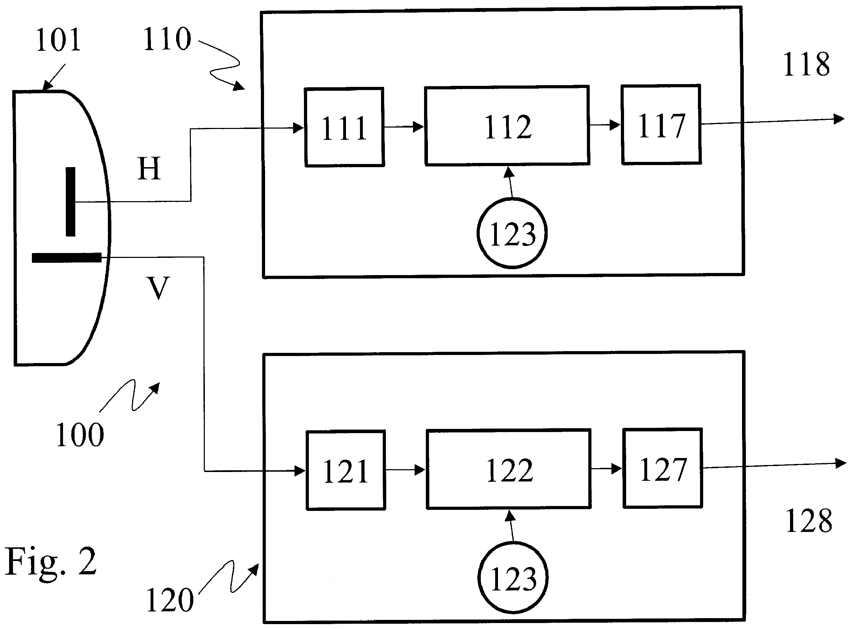

Although it is also possible to transmit more than two channels, for simplicity, in the following description in relation to figures 1 and 2, implementations based on only two channels are discussed.

Therefore, according to frequency reuse techniques, separate and independent signals are transmitted over the same wireless channel using a single antenna. However, despite the orthogonality of the two signals, in practice some interference between the signals often occurs due to imperfect antenna isolation and channel degradation. In order to cancel the effects of this interference, a known solution is based on the use of an XPIC which is included in the receiver and which processes and combines the signals from the two receiving paths to recover the original, independent signals.

Figure 1 is a schematic representation of elements of a receiver using a cross-polarization interference canceller (XIPC) according to known techniques.

The receiver 100 comprises a receive port 101, such as an antenna, for example a dual polar antenna, capable of receiving a cross-polarized signal and feeding one component H of the cross-polarized signal to a first receiving block 110 and another component of the cross-polarized signal V to a second receiving block 120.

The first receiving block 110 comprises a first receiver element 111 for performing typical operations such as filtering and amplifying the received signal, for example a microwave signal, a first converter 112 for down-converting the received signal to intermediate or baseband frequencies, a first local oscillator 113 for driving the converter with the required frequency and a first XIPC 114 for demodulating and cancelling interference effects.

Similar to the first receiving block 110, the second receiving block 120 comprises a second receiver element 121 for performing typical operations such as filtering and amplifying the received signal, for example a microwave signal, a second converter 122 for down-converting the received signal to intermediate or baseband frequencies, a second local oscillator 123 for driving the converter with the required frequency and a second XIPC 124 for demodulating and cancelling interference effects.

The principle of operation of XPIC is that it takes samples of the interfering signals which are available in the cross-polarized channel, and feeds them through complex networks to the desired channel to cancel the interference. Usually the control of the added signal and the compensation of the interference can take place at RF (radio frequency), IF (intermediate frequency) or baseband level.

As shown in figure 1, the first XIPC 114 on the one hand receives from the first converter 112 a down-converted first signal corresponding to the H component of the received signal input to the first receiving block 110, and on the other hand, as represented by means of arrow 125, takes samples of the a down-converted second signal output from the second converter 122 which correspond to the V component of the signal input to the second receiving block 120.

The XI PC detects certain characteristics of the received signals such as for example amplitude or phase of each signals and compares these characteristics in order to detect any possible differences between the two received signals which could be indicative of presence of interference. If such differences are detected, thus detecting the presence of interference, the XIPC performs compensation processes in order to cancel the interference detected. The resulting signal, with the interference cancelled is output 116 from the first receiving block 110.

Similar to the first XIPC 114, the second XIPC 124 receives, on the one hand, from the second converter 122 a down-converted second signal corresponding to the V component of the received signal input to second receiving block 120, and on the other hand, as represented by means of arrow 115, takes samples of the a down-converted first signal output from the first converter 112 which correspond to the H component of the signal input to the first receiving block 110. Here also, the XIPC detects certain characteristics of the received signals such as for example amplitude or phase of each signals and compares these characteristics in order to detect any possible differences between the two received signals which could be indicative of presence of interference. If such differences are detected, thus detecting the presence of interference, the XIPC performs compensation processes in order to cancel the interference detected. The resulting signal, with the interference cancelled is output 126 from the second receiving block 120.

The process of compensation for cancelling interference using XIPCs is however complex. For example, for frequency bands above 15 GHz, the XPIC starts to operate when the effect of the flat fading is increased, causing the system to operate close to threshold. This is because of the existence of cumulative effects between co-channel noise and co-channel cross polarization signal. In such conditions, the XIPC attempts to cancel the cross polarization signal without being able to eliminate the co-channel noise. Furthermore, in order to perform such cancellation with an improved performance, there is a need for presence of synchronization between the first local oscillator 113 and the second local oscillator 123 (this is represented by a double-headed arrow between the local oscillator 113 and 123). This is due to the fact that the XIPC can only compare the characteristics of the two signals, as described above, when the two signals are synchronized. However, maintaining synchronization between the two local oscillators 113 and 123 is a complicated task.

Another drawback of the known systems using XIPC is that they require signal exchange between the two XIPCs 114 and 124 which also implies limitations in installation.

The above drawbacks give rise to complexity in system design and increase in cost.

Figure 2 is a schematic representation of elements of a receiver according to embodiments of the present invention in which the use of a cross-polarization interference canceller (XIPC) may be avoided. In this figure, like elements are represented by like reference numerals as those of figure 1.

It is to be noted that the exemplary embodiments described herein relate to polarization in H and V components. However, those skilled in the related art will realize that other polarization schemes such as for example circular polarization, clockwise polarization or anticlockwise polarization may also be used within the scope of the present invention.

The receiver 100 comprises a receive port 101, such as an antenna, for example a dual polar antenna, capable of receiving a cross-polarized signal and feeding one component H of the cross-polarized signal to a first receiving block 110 and another component of the cross-polarized signal V to a second receiving block 120.

It is also possible to use two different antennas, one operating on the H polarization and the other operating on the V polarization.

The first receiving block 110 comprises a first receiver element 111 for performing typical operations such as filtering and amplifying the received signal, for example a microwave signal, a first converter 112 for down-converting the received signal to intermediate or baseband frequencies, a first local oscillator 113 for driving the converter with the required frequency. According to embodiments of the present invention, the first receiving block 110 comprises a first demodulator 117 which is used for demodulating the received signal. The first demodulator 117 operates based on adaptive modulation technique. According to this technique, the modulation of the radio signal is dynamically varied according to changes in radio signal quality.

In particular, the first demodulator 117 demodulates the received signal and detects whether cross-polarization interference is present in the signal. If cross-polarization is detected to be present, it is determined whether the level of such cross-polarization interference is above a predetermined threshold which may cause degradation in communication quality. In case the level of cross-polarization interference is higher than the predetermined threshold, the receiver transmits a control signal to the transmitter (not shown) indicating the presence of cross-polarization interference in the radio channels as being transmitted using frequency reuse technique. The transmitter accordingly dynamically modifies the modulation schemes of the channels in order to avoid the cross-polarization interference or reduce it below the predetermined threshold.

It is to be noted that the demodulator 117 is also capable of detecting other interferences such as external interference, adjacent channel interference and similar effects.

When the level of cross-polarization interference is below the predetermined threshold, modulation can be performed using high data transmission capacity, e.g. 16-QAM (16-Quadrature Amplitude Modulation) or higher according to the particular requirements of transmission. On the contrary, if, during transmission, the level of cross-polarization interference increases above the predetermined threshold, use may be made of a different type of modulation which is more robust against cross-polarization interference, for example the QPSK (Quadrature Phase Shift Keying) scheme, which has a lower transmission capacity and a greater value of the signal-to-noise ratio, as compared to the QAM above mentioned. In this manner, cross-polarization interference is cancelled or at least its level is controlled and maintained below said predetermined threshold. The signal already demodulated with no, or acceptably reduced, cross-polarization interference is output 118 from the first receiving block 110.

Similar to the first receiving block 110, the second receiving block 120 comprises a second receiver element 121 for performing typical operations such as filtering and amplifying the received signal, for example a microwave signal, a second converter 122 for down-converting the received signal to intermediate or baseband frequencies, a second local oscillator 123 for driving the converter with the required frequency. According to embodiments of the present invention, the second receiving block comprises a second demodulator 127 is used for demodulating the received signal. The second demodulator 127 operates based on adaptive modulation technique. According to this technique, the modulation of the radio signal is dynamically varied according to changes in radio signal quality.

In particular, the second demodulator 127 demodulates the received signal and detects whether cross-polarization interference is present in the signal. If cross-polarization is detected to be present, it is determined whether the level of such cross-polarization interference is above a predetermined threshold which may cause degradation in communication quality. In case the level of cross-polarization interference is higher than the predetermined threshold, the receiver transmits a control signal to the transmitter (not shown) indicating the presence of cross-polarization interference in the radio channels as being transmitted using frequency reuse technique. The transmitter accordingly dynamically modifies the modulation schemes of the channels in order to avoid the cross-polarization interference or reduce it below the predetermined threshold.

It is to be noted that the demodulator 127 is also capable of detecting other interferences such as external interference, adjacent channel interference and similar effects.

When the level of cross-polarization interference is below the predetermined threshold, modulation can be performed using high data transmission capacity, e.g. 16-QAM (16-Quadrature Amplitude Modulation) or higher according to the particular requirements of transmission. On the contrary, if, during transmission, the level of cross-polarization interference increases above the predetermined threshold, use may be made of a different type of modulation which is more robust against cross-polarization interference, for example the QPSK (Quadrature Phase Shift Keying) scheme, which has a lower transmission capacity and a greater value of the signal-to-noise ratio, as compared to the QAM above mentioned. In this manner, cross-polarization interference is cancelled or at least its level is controlled and maintained below said predetermined threshold. The signal already demodulated with no, or acceptably reduced, cross-polarization interference is output 128 from the first receiving block 120.

It is to be noted that the two demodulators 117 and 127 operate independently from each other. As shown in figure 2, each receiving block 110 and 120 has an independent local oscillator 113 and 123 respectively.

Furthermore, the two demodulators 117 and 127 may be of different type, belong to difference equipment families or be made by different manufacturers.

The fact that these oscillators operate independently eliminates the need of synchronization between the two oscillators, or the requirement of signal exchange between the two receiving blocks which as already mentioned in relation to figure 1, are complex tasks, cause increase in system design and costs as well as limitations in installation. In addition, eliminating the need for exchange of signals between the two receiving blocks has the advantage that independent transmissions may be provided to different customers, in case there is a need to improve the level of security in transmission such that the communication of the two different customers, or users, are performed in isolation between each other..

Furthermore, use of adaptive modulators 117 and 127 eliminates the need for using XIPCs which are more expensive and also require complex design.

By using the solution of the invention it becomes possible for the system to protect itself when co-channel interference levels becomes too high, by changing the modulation scheme to a lower modulation scheme without impairments and being capable of supporting such high level of co-channel interference. As soon as the conditions of transmission are improved, the system is able to return to a higher modulation scheme. The process of changing modulation scheme as a function of co-channel interference level is, in this manner, made automatic.

Another advantage of the solution provided by embodiments of the present invention is that the task of upgrading a system which was originally not designed to implement frequency reuse to a system capable of using frequency reuse technique become simple and inexpensive compared to the known systems as very little changes in circuit design would be needed, whereas with the known solutions, upgrading is either not possible or is needed to be foreseen at the very beginning of the original system design. Furthermore, in the embodiments of the present invention, systems provided by different manufacturers may be implemented without substantial complexity.

A further advantage of embodiments of present invention is the possibility to reuse the frequency, not only when the channel spectrums completely overlap, but also in occasions where the channel spectrums do not completely overlap. Namely, transmitting the H and V channels using different frequency spacings.

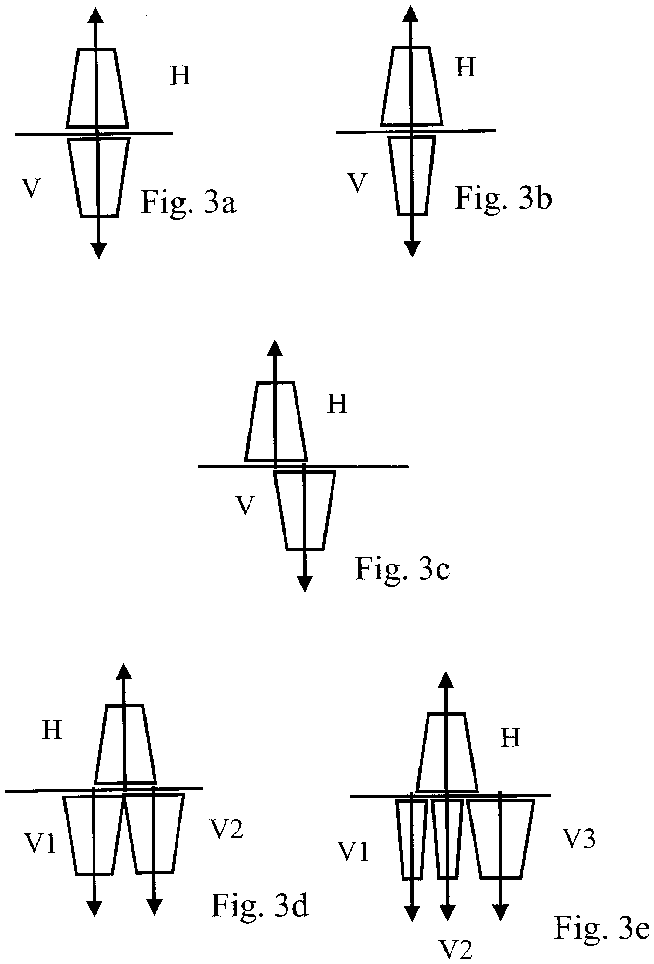

Figures 3a, 3b, 3c, 3d and 3e illustrate these possibilities.

Figure 3a represents a typical case of frequency reuse in which the two channels, H and V, are transmitted using the same frequency spacing (spectrums overlap completely). The only difference between the two channels is that they are orthogonal to each other. In this implementation, the use of adaptive modulation as proposed by the solution of the present invention as well as a XIPC is possible.

Figure 3b, illustrates a case of frequency reuse in which the two channels, H and V, are transmitted using different symbol rates such that while the channels have the same center frequency, their respective spectrum portions are different and overlap only in part.

Figure 3c illustrates another special case of frequency reuse, the so-called partial frequency reuse, in which the channels H and V are not transmitted using exactly the same frequency spacing and thus the channel spectrums do not completely overlap. As shown in this figure, there is a slight mismatch between the respective frequencies of the channels.

Figure 3d, illustrates a further special case of frequency reuse, the so-called alternate frequency reuse, in which three channels H, V1 and V2 are transmitted simultaneously such that there is a difference between the frequency spacing of the channels. In this figure, similar to the situation shown in figure 3c, there is a slight mismatch between the spectrum of the H channel and the respective spectrums of the V1 and V2 channels and the channels have different symbol rates.

Figure 3e, illustrates still another special case of frequency reuse, the so-called multiple and not homogeneous frequency reuse, in which four channels H, V1, V2 and V3 are transmitted simultaneously such that there is a difference between the frequency spacing of the channels. In this figure also a mismatch between the channel spectrum of the H channel and the respective channel spectrums of the V1, V2 and V3 channels is present.

In the cases of figures 3b, 3c, 3d and 3e, the use of a XIPC is either not possible or the XIPC would need to be modified as to functionalities in order to be able to operate. This is because the XIPC is only able to operate between two channels having the same symbol rate (although the may have different modulation schemes) and the same frequency.

However, in all the cases of figures 3a, 3b, 3c and 3d, the use of adaptive modulation in order to eliminate or reduce co-channel interference, as proposed by the invention, is possible and easy to implement.

The solution proposed by embodiments of the present invention also provides the possibility of implementing frequency reuse between two systems from different families and/or from different manufactures, as well as the possibility of implementing frequency reuse among more than two systems.

In addition, due to the possibility of providing independent transmissions to different customers, or users, the level of security in transmission is improved such that the communication of the two different customers are performed in isolation between each other.

The receiver according to embodiments of the present invention may include blocks which can be hardware devices, software modules or combination of hardware devices and software modules

Further, it is to be noted that the list of structures corresponding to the claimed means is not exhaustive and that one skilled in the art understands that equivalent structures can be substituted for the recited structure without departing from the scope of the invention.

It is also to be noted that the order of the steps of the method of the invention as described and recited in the corresponding claims is not limited to the order as presented and described and may vary without departing from the scope of the invention.

## Claims

1. A method for implementing frequency reuse in a radio communication system, wherein a first data stream is transmitted on a first channel (H) using a first frequency, a first polarization and a first modulation scheme and at least one second data stream is transmitted on a second channel (V, V1, V2, V3) using a second frequency, a second polarization and a second modulation scheme, the first modulation scheme and the second modulation scheme being adaptive and the first polarization being different from the second polarization, the method being **characterized by** comprising the step of changing at least one of said first modulation scheme and the second modulation scheme in response to detecting a level of cross-polarization interference between the first channel and the second channel wherein changing at least one of said first modulation scheme and the second modulation scheme comprises the steps of:
a. demodulating a signal received;
b. detecting whether cross-polarization is present in the signal
c. if cross-polarization is detected to be present, determining whether a level of such cross-polarization interference is above a predetermined threshold level
d. if the level of cross-polarization interference is determined to be higher than the predetermined threshold level, transmitting a control signal indicating the presence of cross-polarization interference.

2. The method of claim 1, wherein the first frequency and the second frequency may be the same, or may be different.

3. The method of claim 1 or claim 2, wherein the first channel and the second channel overlap partially in channel spectrum.

4. The method of claim 1 or claim 2, wherein the first channel and the second channel have the same center frequency and different spectrum portions.

5. The method of claim 1 or claim 2, wherein a third channel partially overlaps in channel spectrum with the first channel.

6. The method of claim 5, wherein at least a fourth channel partially overlaps in channel spectrum with the first channel.

7. The method of any one of the preceding claims wherein the first channel corresponds to a communication of a first user and at least one other channel corresponds to a communication of a second user, the first channel and the second channel communicating independently from each other.

8. A receiver (100) configured for implementing frequency reuse in a radio communication system, wherein a first data stream is received on a first channel (H) using a first frequency, a first polarization and a first modulation scheme and at least a second data stream is transmitted on a second channel (V, V1, V2, V3) using a second frequency, a second polarization and a second modulation scheme, the first modulation scheme and the second modulation scheme being adaptive and the first polarization being different from the second polarization, **characterized in that** the receiver is configured to detect a level of cross-polarization interference between the first channel and the second channel and to transmit a control signal indicative the presence of said cross-polarization interference in a radio channel in case the level of cross-polarization interference detected in said channel is determined to be higher than the predetermined threshold value.

9. The receiver of claim 8, wherein said control signal comprises a request for change of at least one of said first modulation scheme and the second modulation scheme.

10. The receiver of claim 8 or claim 9 comprising a receive port for receiving a cross-polarized signal, a first receiving block for receiving a first component of the cross-polarized signal and a second receiving block for receiving another component of the cross-polarized signal wherein the first receiving block comprises a first demodulator configured to implement adaptive modulation and the second receiving block comprises a second demodulator configured to implement adaptive modulation, the first demodulator and the second demodulator configured to operate independently from each other.

11. The receiver of claim 10, wherein each of the first demodulator and the second demodulator is configured to demodulate a received signal and detect a presence of cross-polarization interference and determine whether a level of the cross-polarization interference is above a predetermined threshold value.

12. The receiver of any one of claims 8 to claim 11, wherein the first frequency and the second frequency may be the same, or may be different.

## Patentansprüche

1. Verfahren zum Implementieren von Frequenzwiederverwendung in einem Funkkommunikationssystem, wobei ein erster Datenstrom unter Verwendung einer ersten Frequenz, einer ersten Polarisierung und eines ersten Modulationsschemas auf einem ersten Kanal (H) übermittelt wird, und wobei mindestens ein zweiter Datenstrom unter Verwendung einer zweiten Frequenz, einer zweiten Polarisierung und eines zweiten Modulationsschemas auf einem zweiten Kanal (V, V1, V2, V3) übermittelt wird, wobei das erste Modulationsschema und das zweite Modulationsschema adaptiv sind und wobei die erste Polarisierung verschieden von der zweiten Polarisierung ist, wobei das Verfahren **dadurch gekennzeichnet ist, dass** es in Reaktion auf das Feststellen eines Grades von Kreuzpolarisationsinterferenz zwischen dem ersten Kanal und dem zweiten Kanal den Schritt des Änderns mindestens entweder des ersten Modulationsschemas oder des zweiten Modulationsschemas umfasst, wobei das Ändern mindestens entweder des ersten Modulationsschemas oder des zweiten Modulationsschemas die folgenden Schritte umfasst:
a. das Demodulieren eines empfangenen Signals;
b. das Feststellen, ob in dem Signal Kreuzpolarisation vorhanden ist;
c. wenn das Vorhandensein von Kreuzpolarisation festgestellt wird, das Bestimmen, ob ein Grad der betreffenden Kreuzpolarisationsinterferenz über einem vordefinierten Grenzwert liegt;
d. wenn der Grad der Kreuzpolarisationsinterferenz als über dem vorbestimmten Grenzwert liegend bestimmt wird, das Übermitteln eines Steuersignals, welches das Vorhandensein einer Kreuzpolarisationsinterferenz indiziert.

2. Das Verfahren nach Anspruch 1, wobei die erste Frequenz und die zweite Frequenz gleich oder unterschiedlich sein können.

3. Verfahren nach Anspruch 1 oder Anspruch 2, wobei sich der erste Kanal und der zweite Kanal teilweise im Kanalspektrum überlappen.

4. Das Verfahren nach Anspruch 1 oder 2, wobei der erste Kanal und der zweite Kanal dieselbe Mittelfrequenz und unterschiedliche Spektralanteile haben.

5. Das Verfahren nach Anspruch 1 oder 2, wobei sich ein dritter Kanal im Kanalspektrum teilweise mit dem ersten Kanal überlappt.

6. Das Verfahren nach Anspruch 5, wobei sich mindestens ein vierter Kanal im Kanalspektrum teilweise mit dem ersten Kanal überlappt.

7. Das Verfahren nach einem der vorgenannten Ansprüche, wobei der erste Kanal einer Kommunikation eines ersten Benutzers und mindestens ein weiterer Kanal einer Kommunikation eines zweiten Benutzers entsprechen, wobei der erste Kanal und der zweite Kanal unabhängig voneinander kommunizieren.

8. Ein Empfänger (100), der konfiguriert ist für das Implementieren von Frequenzwiederverwendung in einem Funkkommunikationssystem, wobei ein erster Datenstrom unter Verwendung einer ersten Frequenz, einer ersten Polarisierung und eines ersten Modulationsschemas auf einem ersten Kanal (H) empfangen wird, und wobei mindestens ein zweiter Datenstrom unter Verwendung einer zweiten Frequenz, einer zweiten Polarisierung und eines zweiten Modulationsschemas auf einem zweiten Kanal (V, V1, V2, V3) übermittelt wird, wobei das erste Modulationsschema und das zweite Modulationsschema adaptiv sind und wobei die erste Polarisierung verschieden von der zweiten Polarisierung ist, **dadurch gekennzeichnet, dass** der Empfänger konfiguriert für das Feststellen eines Grades von Kreuzpolarisationsinterferenz zwischen dem ersten Kanal und dem zweiten Kanal und für das Übermitteln eines Steuersignals, welches das Vorhandensein besagter Kreuzpolarisationsinterferenz in einem Funkkanal in dem Fall indiziert, dass der Grad der in besagtem Kanal festgestellten Kreuzpolarisationsinterferenz höher als der vordefinierte Grenzwert ist.

9. Der Empfänger nach Anspruch 8, wobei besagtes Steuersignal eine Anfrage zur Änderung von mindestens entweder besagtem erstem Modulationsschema oder von besagtem zweitem Modulationsschema umfasst.

10. Der Empfänger nach Anspruch 8 oder 9, einen Empfangsport für den Empfang eines kreuzpolarisierten Signals, einen ersten Empfangsblock für den Empfang einer ersten Komponente des kreuzpolarisierten Signals und einen zweiten Empfangsblock für den Empfang einer weiteren Komponente des kreuzpolarisierten Signals umfasst, wobei der erste Empfangsblock einen ersten Demodulator umfasst, der konfiguriert ist für das Implementieren adaptiver Modulation, und wobei der zweite Empfangsblock einen zweiten Demodulator umfasst, der konfiguriert ist für das Implementieren adaptiver Modulation, wobei der erste Demodulator und der zweite Demodulator dafür konfiguriert sind, um unabhängig voneinander betrieben zu werden.

11. Der Empfänger nach Anspruch 10, wobei der erste Demodulator und der zweite Demodulator konfiguriert sind für das Demodulieren eines empfangenen Signals und für das Feststellen eines Vorhandenseins einer Kreuzpolarisationsinterferenz sowie für das Bestimmen, ob ein Grad der Kreuzpolarisationsinterferenz über einem vordefinierten Grenzwert liegt.

12. Der Empfänger nach einem jeglichen der Ansprüche 8 bis 11, wobei die erste Frequenz und die zweite Frequenz gleich oder unterschiedlich sein können.

## Revendications

1. Procédé de mise en oeuvre de la réutilisation de fréquence dans un système de communication radio, dans lequel un premier flux de données est transmis sur un premier canal (H) en utilisant une première fréquence, une première polarisation et un premier schéma de modulation et au moins un deuxième flux de données est transmis sur un deuxième canal (V, V1, V2, V3) en utilisant une deuxième fréquence, une deuxième polarisation et un deuxième schéma de modulation, le premier schéma de modulation et le deuxième schéma de modulation étant adaptatifs et la première polarisation étant différente de la deuxième polarisation, le procédé étant **caractérisé en ce qu'**il comprend l'étape de modification d'au moins l'un desdits premier schéma de modulation et deuxième schéma de modulation en réponse à la détection d'un niveau d'interférences de polarisation croisée entre le premier canal et le deuxième canal, la modification d'au moins l'un desdits premier schéma de modulation et deuxième schéma de modulation comprenant les étapes suivantes :
a. démoduler un signal reçu ;
b. détecter si une polarisation croisée est présente dans le signal ;
c. si la présence d'une polarisation croisée est détectée, déterminer si le niveau de ces interférences de polarisation croisée se situe au-dessus d'un niveau de seuil prédéterminé ;
d. s'il est déterminé que le niveau des interférences de polarisation croisée est supérieur au niveau de seuil prédéterminé, transmettre un signal de commande indiquant la présence d'interférences de polarisation croisée.

2. Procédé selon la revendication 1, dans lequel la première fréquence et la deuxième fréquence peuvent être identiques, ou peuvent être différentes.

3. Procédé selon la revendication 1 ou 2, dans lequel le premier canal et le deuxième canal se chevauchent partiellement dans le spectre de canal.

4. Procédé selon la revendication 1 ou 2, dans lequel le premier canal et le deuxième canal ont la même fréquence centrale et des parties de spectre différentes.

5. Procédé selon la revendication 1 ou 2, dans lequel un troisième canal chevauche partiellement le premier canal dans le spectre de canal.

6. Procédé selon la revendication 5, dans lequel au moins un quatrième canal chevauche partiellement le premier canal dans le spectre de canal.

7. Procédé selon l'une quelconque des revendications précédentes, dans lequel le premier canal correspond à une communication d'un premier utilisateur et au moins un autre canal correspond à une communication d'un deuxième utilisateur, le premier canal et le deuxième canal communiquant indépendamment l'un de l'autre.

8. Récepteur (100) configuré pour mettre en oeuvre la réutilisation de fréquence dans un système de communication radio, dans lequel un premier flux de données est reçu sur un premier canal (H) en utilisant une première fréquence, une première polarisation et un premier schéma de modulation et au moins un deuxième flux de données est transmis sur un deuxième canal (V, V1, V2, V3) en utilisant une deuxième fréquence, une deuxième polarisation et un deuxième schéma de modulation, le premier schéma de modulation et le deuxième schéma de modulation étant adaptatifs et la première polarisation étant différente de la deuxième polarisation, **caractérisé en ce que** le récepteur est configuré pour détecter un niveau d'interférences de polarisation croisée entre le premier canal et le deuxième canal et pour transmettre un signal de commande indiquant la présence desdites interférences de polarisation croisée sur un canal radio dans le cas où il est déterminé que le niveau des interférences de polarisation croisée détecté sur ledit canal est supérieur à la valeur de seuil prédéterminée.

9. Récepteur selon la revendication 8, dans lequel ledit signal de commande comprend une demande de modification d'au moins l'un desdits premier schéma de modulation et deuxième schéma de modulation.

10. Récepteur selon la revendication 8 ou la revendication 9 comprenant un port de réception destiné à recevoir un signal à polarisation croisée, un premier bloc de réception destiné à recevoir une première composante du signal à polarisation croisée et un deuxième bloc de réception destiné à recevoir une autre composante du signal à polarisation croisée dans lequel le premier bloc de réception comprend un premier démodulateur configuré pour mettre en oeuvre une modulation adaptative et le deuxième bloc de réception comprend un deuxième démodulateur configuré pour mettre en oeuvre une modulation adaptative, le premier démodulateur et le deuxième démodulateur étant configurés pour fonctionner indépendamment l'un de l'autre.

11. Récepteur selon la revendication 10, dans lequel chacun des premier et deuxième démodulateurs est configuré pour démoduler un signal reçu et détecter la présence d'interférences de polarisation croisée et déterminer si le niveau des interférences de polarisation croisée est au-dessus d'une valeur de seuil prédéterminée.

12. Récepteur selon l'une quelconque des revendications 8 à 11, dans lequel la première fréquence et la deuxième fréquence peuvent être identiques, ou peuvent être différentes.
